# EUROPEAN PATENT SPECIFICATION

(11) **EP 1 418 476 B1**
(45) Date of publication and mention of the grant of the patent: **18.01.2006**
(21) Application number: 03103729.4
(22) Date of filing: 08.10.2003
(51) Int. Cl.: G05B 13/02, B60H 1/00

(54) **Adaptive control system for a user-adjustable system in a vehicle**
Adaptives Steuersystem für ein vom Anwender einstellbares Fahrzeugsystem
Système de commande adaptif pour un système de véhicule ajustable par l'utilisateur

(30) Priority: 14.10.2002 LU 90973
(43) Date of publication of application: 12.05.2004
(73) Proprietor: Delphi Technologies, Inc., Troy, MI 48007 (US)
(72) Inventor: Hofinger, Herbert, 4804 Rodange (LU)
(74) Representative: Beissel, Jean

(56) References cited:
- US-A- 5 549 152
- US-A1- 2001 000 407
- US-B1- 6 324 529

## Description

### FIELD OF THE INVENTION

The present invention generally relates to an adaptive control system for a user-adjustable system in a vehicle, in particular for a vehicle heating ventilating and air conditioning unit. The present invention also relates to a method for operating such an adaptive control system.

### BACKGROUND OF THE INVENTION

In order to improve comfort in automotive vehicles, it has been proposed to use adaptive control systems for controlling the heating ventilating and air conditioning (HVAC) unit. Such adaptive control systems are capable of learning the preferences of individual persons in relation to different operating conditions of the HVAC unit.

An adaptive control system for an HVAC unit is e.g. described in JP 03-177742. The system comprises a series of sensors, a neural network unit, a user input device and a learning controlling unit The sensors measure environmental conditions such as outside temperature, sun load, in-car temperature and generate input data reflecting these measurements. The neural network unit is capable of operating in an automatic mode, in which it receives the input data and generates output data for controlling the HVAC system according to a pre-programmed and pre-calibrated control pattern. This control pattern is determined at the manufacturing level of the adaptive control system, either by programming the control pattern or by an initial training of the system. When the settings in automatic mode do not meet the user's preferences, the latter can interfere on the system through the input device, which generates user interference data. When such an user interference is detected, the learning controlling unit processes the input data and the additional data that indicate the changed condition to generate new parameters for the control pattern. Subsequently, the HVAC unit is automatically controlled by the neural network unit having new parameters for the control pattern, so that the climate will correspond to the users preferences.

Although such an adaptive control system is interesting since it has the capacity to learn from user preferences, it does not prove satisfactory enough in practice.

### OBJECT OF THE INVENTION

The object of the present invention is to provide an improved adaptive control system. This object is achieved by an adaptive control system as claimed in claim 1.

### SUMMARY OF THE INVENTION

According to the present invention, an adaptive control system associated with a user-adjustable system of a vehicle comprises:
a learning network operable in an automatic mode in which it receives input data including sensor data and generates output data according to a control pattern to control the user-adjustable system;
user input means for generating user input data during a user interference;
an interference management unit for receiving the user interference data;
output changing means associated with the interference management unit for generating modified output data so as to control the user-adjustable system according to the user interference data;
a learning management unit associated with the learning network for adapting the control pattern by learning from input data at the time of said user interference and modified output data.

It will be appreciated that the present adaptive control system further comprises filtering means for identifying a valid user interference that will be used for learning by the learning management unit. User interferences that are not considered valid are rejected, which means that such user interferences are ignored and will be of no consequence on the control pattern, In other words, only valid user interferences will be learned, and thereby prevents the use of data that may distort the learning. The present adaptive control system thus performs an improved learning management, which results in enhanced learning capability that will prove more satisfying to users. Over time, the adaptive control system will adapt its initial comfort level-the pre-calibrated and pre-programmed control pattem-to suit to the driver's and/or passengers' preferences. A further advantage of the present system is that, with the help of the users, the system will automatically adapt to sensor drift.

It will be appreciated that the present adaptive control system is particularly well adapted for the control of a vehicle heating ventilating and air conditioning system.

The filtering means is advantageously designed to check operating states or conditions of a number of predetermined components, so as to filter out constraints that are incompatible with learning and conclude to a valid interference in case no incompatibility to learning is detected.

In a preferred embodiment, the filtering means comprises three filter types. It is however to be noted that each of these three filters could be used alone in an adaptive control system, or in combination with another one of these filters. The filtering means concludes to a valid user interference only if that user interference is considered valid by all three filters.

The first filter type is a system state filter, which is designed to check the operating state, at the time of the user interference, of a number of predetermined components of the user-adjustable system associated with the adaptive control system. In case the user-adjustable system is an HVAC system, the system state filter is preferably designed to check: the temperature or capacity of a heater or cooler; if a safety function was active; or if the temperature set-point of the HVAC system had been reached at the time of the user interference. In case one of the checked components is in an operating states that is incompatible with the change requested by the user, the filtering means will conclude to an invalid user interference. Such states that are incompatible with learning are predetermined and may be stored in a look-up table or storage means associated with the system state filter.

The second filter type is an environment state filter, which is designed to check a predetermined number of parameters that are independent from the user-adjustable system associated with the adaptive control system, but that may affect the control thereof. In the case of a vehicle HVAC system, this environment state filter is preferably designed to check for an open window, door, roof, or soft top. It will be understood that controlling the climate in the passenger compartment while there is a parasitic air entry is difficult and not reproducible. Therefore, learning a user interference in such a condition is not reliable and would distort the learning. Such conditions or parameter values that are incompatible with learning are predefined and can be stored in a look-up table or a storage means associated with the environment state filter.

The third filter type is a user behaviour filter, which comprises a validation timer that is activated by a user interference, and until the expiration of which learning is inhibited (the user interference is considered invalid). The occurrence of a new user interference before the expiry of the validation timer causes the validation timer to be re-initialised. If, at the expiry of the validation timer the user interference data are still the same, then the filtering means shall consider the user interference as valid. Hence, the system is forced to wait a certain period of time before learning a change. This will prevent learning user interferences that last a very short time, due e.g. to a mistake or to kids playing around.

Advantageously, the user behaviour filter may be designed to further check if a stable response from the user-adjustable system associated with the adaptive control system has been obtained at the expiry of the validation timer. This allows to make sure that the interference that is to be learned has indeed produced the requested change, so that it is reproducible.

In a further more advantageous embodiment of the user behaviour filter, the validation timer has a variable duration depending on the response time - the time needed by the controlled system to provide the desired change - of the associated user-adjustable system. Indeed, in order to prevent rejecting a user interference due to a slow system response, the validation timer duration is preferably extended in case the user-adjustable device has not reached a stable operating level at the end of the timer duration. The validation timer should preferably have lower and upper duration limits.

The learning network may be based on a variety of technologies. However, it shall preferably include a neural network. In such a case, the learning management unit is capable of training the learning network by providing it with the input data and the modified output data, and adapt the control pattern in such a way that, when the same input data are encountered, the learning network will generate output data as taught, whereby the controlled system will operate according to user preferences. An algorithm that can advantageously be implemented for adapting the control system to learn from the known set of inputs and outputs is the well known C.M.A.C. (Cerebellar Model Articulation Controller) algorithm.

Alternatively, the learning network may use an expert system such as e.g. a fuzzy expert system. In this case, fuzzy rule parameters are updated during learning.

The adaptive control system advantageously comprises a first data storage means to store the input data at the time of interference―that will be used for learning―as well as the data that may be used by the filtering means, i.e. system data, environment data and interference data. The system also includes second data storage means for storing the modified output data.

Some vehicles are equipped with an HVAC system capable of achieving a different climate control in different zones of the vehicle, e.g. driver zone and passenger zone. In such a case, the HVAC system shall contain one adaptive control system of the invention per zone, so that it can specifically adapt to the user preferences in each zone.

Furthermore, the HVAC system may comprise user identification means, such as e.g. push buttons or a smart card reader, that allows for identifying a particular user (driver or passenger). In this context, the system should advantageously be capable of storing a control pattern for each user, and of using the control pattern corresponding to an identified passenger for the climate control.

It is to be noted that the present invention is not exclusively applicable to HVAC systems, but may e.g. be applied to automatic transmission systems, so as to adapt the transmission control to user preferences.

According to another aspect of the present invention, a method for operating an adaptive control system associated with a user-adjustable system in a vehicle is proposed. The adaptive control system is operable in an automatic mode, in which it receives input data including sensor data and generates output data according to a control pattern. The present method comprises the following steps:
(a) detecting user interference data resulting from a user interference with the automatic mode;
(b) generating modified output data based on the user interference data for controlling the associated system;
(c) identifying a valid user interference; and
(d) in case of a valid user interference, initiating a learning process to modify the control pattern by learning from the input data at the time of the user interference and the modified output data corresponding to the valid user interference. By identifying valid user interferences, the present method prevents learning from an incoherent user interference.

In a preferred embodiment, three different methods of identification of a valid user interference are employed. These methods of identification may however be used alone or in combinations of two. An interference is considered valid only if all three methods of identification consider the interference valid.

According to the first identification method, the operating state―at the time of the user interference-of a predetermined number of components of the user-adjustable system is checked. In case these operating states are incompatible with learning, it is concluded to an invalid user interference.

In the second identification method, a predetermined number of parameters independent of said user-adjustable system, but that may affect the control thereof, are checked. In case one of these parameters is in a state or condition that has been defined in the system as incompatible with learning, the user interference is considered invalid.

According to the third identification method, the detection of a user interference causes the activation of a validation timer. It is concluded to a valid user interference if at the expiry of the validation timer, the user interference has not changed and a stable system response has been obtained from the associated user-adjustable system. In a preferred embodiment of this identification method, the validation timer has a variable duration, which depends on the response time of the user-adjustable system. The validation timer may then have a minimal timer duration tₘᵢₙ and a maximal timer duration tₘₐₓ. This allows to take into account cases where system response is slow.

Preferably, each user interference systematically causes the storage of input data, system data and environmental data, as well as interference data, which will be required for the identification of a valid user interference and, in case of a valid user interference, for the learning process.

It is to be noted that the present method is capable of learning in a specific area of the control pattern, determined by the input data. Therefore, the learning process is preferably initiated for each single valid interference, and not when a complete set of training data―for the whole operating range of the control system―is obtained. This also means that after an interference has been considered invalid or learned, the corresponding data stored in the first and second data storage means can be deleted.

It will be understood that the learning process will preferably take place when appropriate, e.g. when the car has just been started or the HVAC system is working in different areas. Therefore, the data corresponding to one or more valid interferences may be stored in the system until a suitable time for learning is reached.

In order to provide a further improved comfort management, the present method may comprise the step of identifying a user, and then using a control pattern associated with said passenger. This control pattern corresponding to a user is then employed in the automatic mode, and updated in case of a valid user interference made by this user. The identification of the user can be done by means of push buttons or by reading a smart card.

### BRIEF DESCRIPTION OF THE DRAWINGS

The present invention will now be described in more detail, by way of example, with reference to the accompanying drawings, in which:
FIG. 1: is a block diagram of a preferred embodiment of an adaptive control system in accordance with the present invention;
FIG.2: is a flowchart of the operation of the user behaviour filter;
FIGS.3 to 6: each show superposed time graphs illustrating the following events: (A) user interference; (B) HVAC system response; (C) identification of a valid user interference; (D) storage of start data; and (E) storage of modified output data.

### DETAILED DESCRIPTION OF A PREFERRED EMBODIMENT

The present invention will be more apparent from the following description of a not limiting embodiment of the adaptive control system of the present invention, in an application relating to climate control in an automotive vehicle.

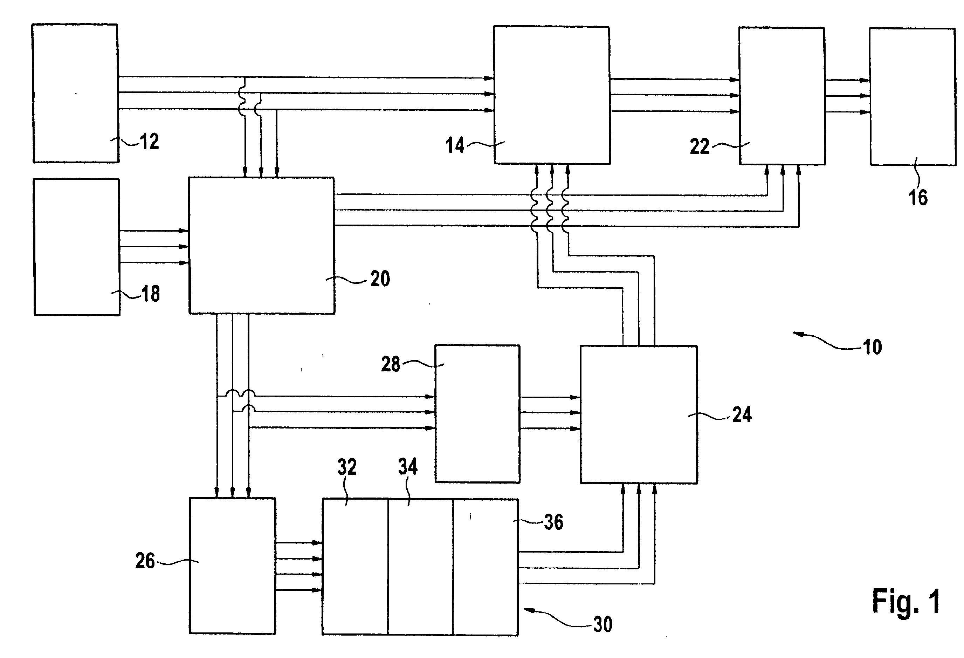

The present adaptive control system, generally indicated 10 in Fig.1, is associated with a vehicle HVAC system (not shown) to control the climate within the passenger compartment based on input data from sensors 12. The input data include data such as outside temperature, in-car temperature, sun load and may also include other data such as air quality and humidity data.

The system 10 comprises a learning network 14, which preferably includes a neural network. Such neural networks are known in the art and will not be described in detail herein. The learning network 14 is operable in an automatic mode, in which it operates according to a control pattern. The control pattern has been pre-calibrated and pre-programmed at the manufacturing stage of the system 10 by a calibration engineer, to provide a certain comfort level inside the vehicle. Hence, in the automatic mode, the learning network receives the input data and generates output data, indicated 16 in Fig.1, that will control the HVAC system according to the control pattern. Blower speed, temperature and air distribution mode are based on these output data generated by the learning network 14. It is to be noted that the output data 16 are not necessarily in a form that allows a direct control of the HVAC components. Therefore, the output data may be after-processed to convert them into control signals that will actually actuate the HVAC components.

As long as the user or users (i.e. driver and/or passengers) are satisfied with the automatic settings of the learning network, and do not interfere with the adaptive control system 10, the latter controls the operation of the HVAC system in the above described manner.

Reference sign 18 indicates a user input device, which allows an user to interfere with the automatic mode to adjust the operation of the HVAC system to his preference, in case he feels uncomfortable with the actual settings in automatic mode. The input device 18 is provided, inter alia, with control buttons for setting the temperature, the blower speed, and the distribution mode. A management interference unit 20 is associated with the user input device 18 and receives the user interference data reflecting a user interference. The system 10 further comprises an output changing means 22 controlled by the interference management unit 20 in such a way as to modify the output data 16 and generate modified output data to control the HVAC system according to the user's preferences. The interference management unit 20 and the output changing means 22 should preferably be designed to rapidly react to a user interference, because it would otherwise make the user doubt as to the proper functioning of the system 10.

The present system 10 further includes a learning management unit 24, which is designed to implement a learning function of the neural network. This means that the system 10 is capable of learning from user interferences, so that it will provide the comfort level preferred by the user the next time the same conditions-same input data-are encountered. The learning management unit 24 is thus designed to determine new parameters for the control pattern and then to update the control pattern so that the learning network 14 will produce output data that will operate the HVAC system according to the user's preferences. For this purpose, the system 10 preferably comprises a first data storage means 26 for storing the input data and the user interference data at the time of user interference. The system also includes a second storage means 28 for storing the modified output data.

It will be appreciated that the present system 10 includes filtering means 30 in order to identify valid user interferences that will be used for learning. Learning is thus only effected with coherent values, which ensures a meaningful learning management and thus provides an improved adaptive control system 10. This filtering means 30 is designed so as to filter constraints by identifying interferences that are incompatible with learning and reject them. In the present embodiment, the filtering means preferably comprises three different filters which are described in detail herebelow.

First filter. The first filter 32 is a system state filter, which is designed to check the operating state of a predetermined number of components of the HVAC system. This includes checking, inter alia, the operating state of the heater core or the refrigerant heat exchanger, so as to inhibit learning in case the operating state is not compatible with learning. Indeed, it will be understood that, if e.g. more heat has been requested during the user interference, and the power train cooling temperature is too cold or the maximum heating capacity has been reached, such a user interference should not be learned.

Furthermore, the system state filter 32 is also preferably designed to check if a safety function is active in the HVAC system at the time of interference, in which case learning should also be avoided. Such safety functions are e.g. de-fogging, de-icing of the evaporator, air quality (activation of air recirculation mode to prevent entry of polluted air) or low charge (in case the level of refrigerant is too low the cooling function is switched off to avoid damaging the HVAC system).

A further aspect that is preferably checked by the system state filter 32 is whether the temperature set by the automatic mode had been reached at the time of the user interference. Again, it will be understood that learning user changes from an HVAC operating state that was not stable may distort the learning.

The operating states that are incompatible with learning are predefined and stored in the system 10. The data required by the systems state filter 32 are called system data and are preferably stored in the first storage means 26 with the corresponding user interference data.

Second filter. The second filter is an environment state filter 34, which is designed to check a predetermined number of non-HVAC parameters that may affect the climate within the vehicle. Such a checking may comprise verifying if a window, door, roof or soft top is open. In case one of these components is in an open state during a user interference, the environment state filter will inhibit learning by considering the user interference as invalid.

Furthermore, the second filter layer may be designed to detect that the car has entered a tunnel or that the driver and/or passengers are wearing wet clothes. Again, to prevent an incoherent learning due to particular (unusual) circumstances, learning is inhibited by considering a user interference as invalid in case a tunnel or wet clothes have been detected.

The conditions incompatible with learning are predefined and stored in the system 10. The data required by the environment state filter 34 are called environment data and are preferably stored in the first storage means 26 with the corresponding user interference data.

Third filter. The third filter is a user behaviour filter 36, which shall permit to identify deliberate and satisfying user interferences that will be learned by the neural network. Such a behaviour filter 36 allows e.g. to avoid learning interferences due to mistakes or children playing with the control panel.

This filter 36 includes a validation timer, which defines a time period during which learning is suspended and the user behaviour and system evolution are monitored. Such a validation timer is activated upon detection of a new user interference. If, at the expiry of the validation timer, the user has not changed its settings and a stable response - i.e. the desired operating state has been obtained - of the HVAC system (to the output modified data) has been obtained, then the user interference is considered as valid, and will be learned by the system 10.

It will be appreciated that in the present embodiment, the validation timer advantageously has a variable duration, that depends on the HVAC system response time. In this case, the validation timer duration preferably has a minimal duration tₘᵢₙ and a maximal duration tₘₐₓ. The minimal duration tₘᵢₙ is the default timer duration. It is preferably chosen as an average physiological time period for a human being to feel the effect of the change of climate. The maximal duration tₘₐₓ is defined as the maximal timer duration, after which, if the system has not become stable, learning must not be performed.

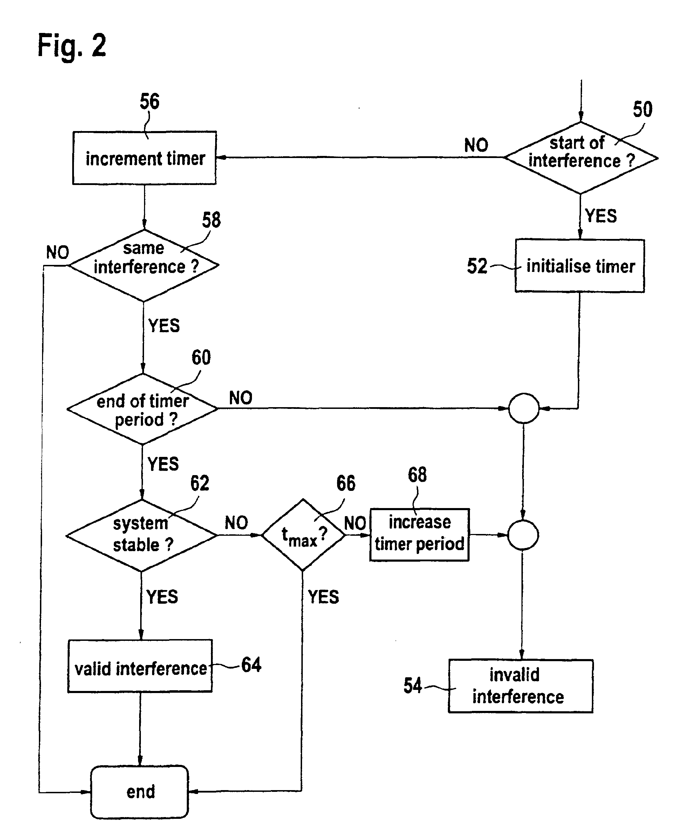

Fig.2 shows a preferred embodiment of an algorithm that may be performed by the user behaviour filter 36 of the present adaptive control system 10. Let's suppose the HVAC system is operating in the automatic mode, and the driver selects a higher set-temperature. This is the start of a new interference, which is detected at 50 and causes the initialisation of the validation timer (at 52). At this time, the interference is considered invalid (54) to prevent any learning.

At the next iteration, if the driver did not change his settings, there is no start of interference at 50, the timer is incremented (at 56), and the interference is thus still the same (test 58). The filter then checks if the validation timer has expired at 60.

As long as the validation timer has not expired, and there is no new interference, the interference is considered invalid.

At the expiry of the validation timer, it is checked whether a stable response has been obtained by the HVAC system (test 62). If the HVAC system is stable, which in this case means that the selected temperature has been reached, then it is concluded to a valid interference (64).

If the HVAC system has not reached a stable level (i.e. the system is still trying to reach the selected temperature), then, as long as the timer has not reached the maximal timer duration tₘₐₓ (test 66) the timer duration is increased (at 68) and the interference is still considered invalid.

If the HVAC system reaches a stable level, at the latest when the timer reaches the value tₘₐₓ, the interference will be considered valid (64). Otherwise, the user behaviour filter will stop when the timer reaches tₘₐₓ and the interference will be considered invalid.

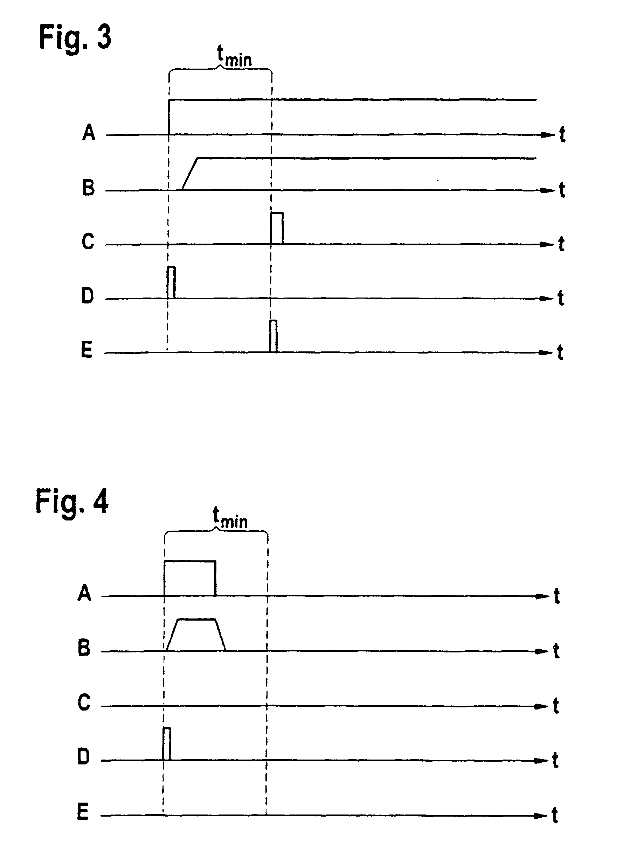

The functioning of the user behaviour filter 36 and of other aspects of the adaptive control system 10 will be now explained with regard to Figs.3 to 6, which correspond to four different examples of user interference. In these examples, the system state filter 32 and environment state filter 34 will not be considered.

In Fig.3, graph A illustrates a user interference during which a new operating state is selected, e.g. the blower speed is increased. This user interference activates the validation timer and initiates the storage of the input data, the environment and system data, and the user interference data, as shown by graph D. The storage of all these data (hereinafter called "start data") that reflect the conditions at the time of the user interference is systematically done as they will be needed for the learning process and by the different filters 32, 34 and 36.

In this example, the system response (graph B) is fast and the HVAC system rapidly reaches a stable operating condition. The duration of the validation timer is materialised by the vertical dashed lines. At the expiry of the minimal duration tₘᵢₙ of the validation timer, no new interference has occurred (same user selected state), and the HVAC system is stable. The filter therefore concludes to a valid interference as indicated by the signal in graph C.

It will be noted that since the modified output data are necessary for the learning function as they represent the known results, the identification of a valid user interference also causes the storage of the modified output data, as shown by the storage signal E. The storage of the modified output data could also have been done earlier, e.g. at the moment the output signal was actually generated. However, it will be understood that the purpose of storing the modified output data is to keep them for learning, and there is no use in storing these data as long as the interference is not valid.

In Fig.4, a new operating state is selected by a user, which activates the validation timer. However, before the expiry of the validation timer, the user change was cancelled. In such a case, there is no learning (no validity signal in graph C) and no storage of the modified output data by the adaptive control system 10.

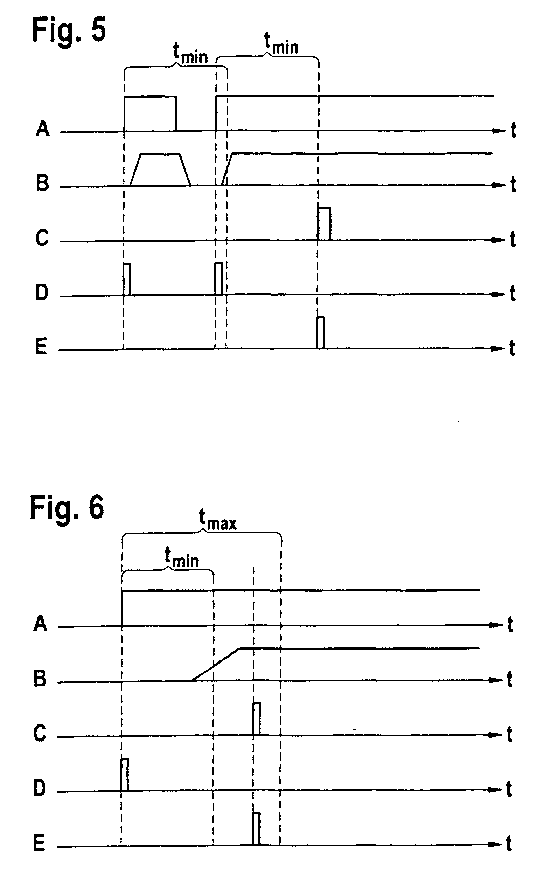

The further example of Fig.5 corresponds to a case where a new user interference occurs before the expiry of the validation timer of a former user interference, as shown in graph A. The first user interference activates the validation timer and causes the storage of start data. The occurrence of the new user interference causes the validation timer to be restarted anew, and the storage of start data at the time of this new user interference. At the expiry of the minimal duration tₘᵢₙ of the validation timer, the interference is still the same and the HVAC system response is stable (graph B). It is thus concluded to a valid user interference (graph C) and the modified output data are stored (graph E).

The fourth example of Fig.6 illustrates a case where system response is slow, as e.g. in the case of a change in temperature. Graph A shows the starting of a new user interference, where a higher temperature has been selected. This new interference activates the validation timer and causes the storage of the start data (graph D). As can be seen on graph B, the system response is very slow, and is not stable at the expiry of the minimal duration tₘᵢₙ of the validation timer. In such a case, the validation timer is extended to allow the system some more time to reach a stable level. In the present example, a stable response of the HVAC system is obtained before the validation timer attains its upper duration limit tₘₐₓ and the interference is still the same. Therefore, it is concluded to a valid user interference (graph C) and the modified output data are stored (graph E).

The detection of the stable level (or response) of the HVAC system is based on a comparison between a set-operating condition and an actual operating condition. This comparison can be performed by the user behaviour filter 36. But the result of this comparison may alternatively be performed by another controller of the HVAC system, and supplied to the user behaviour filter 36 in the form of a stability signal.

A preferred embodiment of the present method for operating an adaptive control system will now be described in more detail, with reference to the system of Fig.1. In normal automatic mode, the input data generated by the environment sensors 12 serve as stimuli for the learning network, which generates output data that adapt the blower speed, temperature settings and distribution mode according to the control pattern. This is the main control function of the system.

A passenger interference on the control panel 18, to modify one of blower speed, temperature or distribution mode, produces user interference data which are detected by the interference management unit 20. To provide instantaneous response, the interference management unit 20 controls the output changing means 22 that modify the output signals to provide the correct feedback to the passengers. In other words, the output changing means 22 stops the output data generated by the learning network and only the modified output data are used to control the HVAC system. It is to be noted that as long as no user interference is detected, the output changing means 22 remains inactive.

At the time a passenger interference is detected, the start data (i.e. the input data, system and environment data and interference data) are also stored in the first data storage means 26. As already explained, these data are systematically stored when a new user interference is detected, because they reflect the conditions at the time of change and the user change.

Then according to an important aspect of the present method, filtering means 30 determine if the user interference is valid. In case the user interfe r-ence is valid, it will be learned by the system 10.

In the present embodiment, the filtering means 30 preferably includes the three filters 32, 34 and 36, arranged in cascade. This means that the second filter 34 performs its check only if the first filter did consider the user interference as valid and that the third filter 36 performs its check only if the second filter did conclude to a valid interference.

In case the filtering means 30 concludes to a valid user interference, the modified output data corresponding to the user interference are then stored in the second data storage means 28.

The identification of a valid user interference will lead to the beginning of a learning process by the learning management, during which the data needed for learning, i.e. the input data serving as stimuli and the modified output data serving as target results, are available from the data storage means 26 and 28. These input data (stimuli) also define the area where the learning should take place in the neural network. The learning process is then controlled by the learning management unit, which determines the new parameters for the basic control pattern, and updates the basic control pattern in the learning network. Subsequently, the output changing means are disabled, thus changing the system response back to the control pattern as stored in the learning network.

Regarding more particularly the learning procedure, the known C.M.A.C. algorithm is preferred for determining the new parameters of the control pattern. In the case of a neural network, this control pattern is generally called learning matrix, which contains the so-called node weights. During the learning function, the learning management will then determine new node weights.

## Claims

1. An adaptive control system associated with a user-adjustable system of a vehicle comprising:
a learning network (14) operable in an automatic mode in which it receives input
data including sensor data and generates output data according to a control pattern to control said user-adjustable system;
user input means (18) for generating user interference data during a user interference;
an interference management unit (20) for receiving said user interference data;
output changing means (22) associated with said interference management unit for generating modified output data so as to control said user-adjustable system according to said user interference data;
a learning management unit (24) associated with said learning network for adapting said control pattern by learning from input data at the time of said user interference and modified output data; and
filtering means (30) for identifying a valid user interference that will be used for learning by said learning management unit.

2. The system according to claim 1, wherein said filtering means comprises a validation timer and concludes to a valid user interference when, at the expiry of said validation timer, a stable response of said associated user-adjustable system has been obtained and said user interference data are unchanged.

3. The system according to the preceding claim, wherein said validation timer has a variable duration, which depends on the response time of said associated user-adjustable system.

4. The system according to the preceding claim, wherein said validation timer initially has a minimal timer duration and a maximal timer duration.

5. The system according to any one of the preceding claims, wherein said filtering means is designed to check the operating state, at the time of said user interference, of a predetermined number of components of said user adjustable system.

6. The system according to the preceding claim, wherein
said user-adjustable system is a heating ventilating and air conditioning unit; and
checking the state of said components includes checking the temperature or capacity of an air heater or cooler, checking whether a safety function is active, or whether a temperature set-point has been reached.

7. The system according to any one of the preceding claims, wherein said filtering means is designed to check a predetermined number of parameters independent from said user-adjustable system but that may affect the control thereof.

8. The system according to the preceding claim, wherein
said user-adjustable system is a heating ventilating and air conditioning system; and
checking said predetermined number of parameters includes checking for open an window, door, roof or hard top, checking for the presence of a tunnel, or for wet clothing.

9. The system according to any one of the preceding claims, wherein said learning network includes a neural network or an expert system.

10. The system according to claim 1, comprising user identification means, and means for assigning a control pattern to an identified user.

11. The system according to any one of the preceding claims, comprising
first data storage means for storing said input data, as well as environment and system data and said user interference data; and
second data storage means for storing said modified output data.

12. A method for operating an adaptive control system associated with a user-adjustable system in a vehicle, said adaptive control system being operable in an automatic mode, in which it receives input data including sensor data and generates output data according to a control pattern, said method comprising the following steps:
(a) detecting user interference data resulting from a user interference with said automatic mode;
(b) generating modified output data based on said user interference data to control said user-adjustable system;
(c) identifying a valid user interference; and
(d) in case of a valid user interference, initiating a learning process to modify said control pattern by learning from input data at the time of said user interference and modified output data corresponding to said valid user interference.

13. The method according to claim 12, wherein step (c) comprises the step of activating a validation timer when a user interference is detected and concluding to a valid user interference if at the expiry of said validation timer, said user interference data have not changed and a stable response has been obtained from said associated user-adjustable system.

14. The method according to the preceding claim, wherein said validation timer has a variable duration, which depends on the response time of said user-adjustable system.

15. The method according to the preceding claim, wherein said validation timer has a minimal duration tₘᵢₙ and a maximal duration tₘₐₓ.

16. The method according to any one of claims 12 to 15, wherein said step (c) comprises the step of checking the operating state, at the time of said user interference, of a predetermined number of components of said user-adjustable system.

17. The method according to any one of claims 12 to 16, wherein said step (c) comprises the step of checking a predetermined number of parameters independent of said user-adjustable system but that may affect the control thereof.

18. The method according to any one of claims 12 to 17, wherein said learning process is initiated for each single valid user interference.

19. The method according to any one of claims 12 to 18, wherein said input data, environment data, system data, and user interference data are stored at the time of a user interference, and deleted either after a corresponding valid interference has been learned or after this user interference has been considered invalid.

20. The method according to any one of claims 12 to 19, comprising the step of identifying a user, and then using a control pattern corresponding to said passenger in said adaptive control system for the control of said associated user-adjustable system.

## Patentansprüche

1. Adaptives Steuersystem mit zugeordnetem benutzerregelbaren System eines Fahrzeugs, das umfasst:
ein Lernnetzwerk (14), das im automatischen Modus betrieben werden kann, wobei es Eingabedaten einschließlich Sensordaten empfängt und Ausgabedaten gemäß einem Steuermuster zur Steuerung des benutzerregelbaren Systems erzeugt;
ein Benutzereingabemittel (18) zur Erzeugung von Benutzereingabedaten während eines Benutzereingriffs;
eine Eingriffsbearbeitungseinheit (20) zum Empfang der Benutzereingriffsdaten;
ein Ausgabeänderungsmittel (22), das der Eingriffsbearbeitungseinheit zugeordnet ist, zur Erzeugung veränderter Ausgabedaten, um das benutzerregelbare System entsprechend den Benutzereingriffsdaten zu steuern;
eine Lernbearbeitungseinheit (24), die dem Lernnetzwerk zugeordnet ist, zur Anpassung des Steuermusters durch Lernen aus den Eingabedaten zum Zeitpunkt des Benutzereingriffs und modifizierten Ausgabedaten und
ein Filtermittel (30) zur Identifizierung eines gültigen Benutzereingriffs, der zum Lernen durch die Lernbearbeitungseinheit benutzt wird.

2. System nach Anspruch 1, wobei das Filtermittel einen Validierungszeitgeber umfasst und auf einen gültigen Benutzereingriff schließt, wenn bei Ablauf des Validierungszeitgebers eine stabile Antwort des zugeordneten benutzerregelbaren Systems empfangen wurde und die Benutzereingriffsdaten unverändert sind.

3. System nach vorstehendem Anspruch, wobei der Validierungszeitgeber eine variable Dauer hat, die von der Antwortzeit des zugeordneten benutzerregelbaren Systems abhängt.

4. System nach vorstehendem Anspruch, wobei der Validierungszeitgeber anfänglich eine minimale Zeitgeberdauer und eine maximale Zeitgeberdauer aufweist.

5. System nach irgendeinem der vorstehenden Ansprüche, wobei das Filtermittel konzipiert ist, um zum Zeitpunkt des Benutzereingriffs den Betriebszustand einer vorbestimmten Anzahl von Komponenten des benutzerregelbaren Systems zu prüfen.

6. System nach vorstehendem Anspruch, wobei
das benutzerregelbare System eine Heizungs-, Lüftungs- und Klimatisierungsanlage ist und
das Prüfen des Zustands der Komponenten das Prüfen der Temperatur oder Kapazität eines Lufterhitzers oder Luftkühlers, und das Prüfen, ob eine Sicherheitsfunktion aktiv ist oder ob ein Temperatureinstellwert erreicht ist, einschließt.

7. System nach irgendeinem der vorstehenden Ansprüche, wobei das Filtermittel konzipiert ist, um eine vorbestimmte Anzahl von Parametern zu prüfen, die von dem benutzerregelbaren System unabhängig sind, dessen Steuerung aber beeinflussen können.

8. System nach vorstehendem Anspruch, wobei
das benutzerregelbare System eine Heizungs-, Lüftungs- und Klimatisierungsanlage ist und
die Prüfung der vorbestimmten Anzahl von Parametern die Prüfung der Öffnung eines Fensters, einer Tür, eines Daches oder Hardtops und die Prüfung, ob ein Tunnel oder nasse Kleidung vorliegt, einschließt.

9. System nach irgendeinem der vorstehenden Ansprüche, wobei das Lernnetzwerk ein neurales Netzwerk oder ein Expertensystem umfasst.

10. System nach Anspruch 1, das ein Benutzeridentifizierungsmittel und ein Mittel umfasst, mit dem ein Steuermuster einem identifizierten Benutzer zugewiesen werden kann.

11. System nach irgendeinem der vorstehenden Ansprüche, das umfasst:
ein erstes Datenspeichermittel zum Speichern der Eingabedaten sowie der Umgebungs- und Systemdaten und der Benutzereingriffsdaten und
ein zweites Datenspeichermittel zum Speichern der veränderten Ausgabedaten.

12. Verfahren zum Betrieb eines adaptiven Steuersystems mit zugeordnetem benutzerregelbaren System in einem Fahrzeug, wobei das adaptive Steuersystem in einem automatischen Modus arbeiten kann, bei welchem es Eingabedaten einschließlich Sensordaten empfängt und Ausgabedaten nach einem Steuermuster erzeugt, wobei das Verfahren die folgenden Schritte umfasst:
a) Erfassung von Benutzereingriffsdaten, die sich aus einem Benutzereingriff in den automatischen Modus ergeben,
b) Erzeugung veränderter Ausgabedaten basierend auf den Benutzereingriffsdaten zur Steuerung des benutzerregelbaren Systems;
c) Identifizierung eines gültigen Benutzereingriffs und
d) im Fall eines gültigen Benutzereingriffs Initiierung eines Lernprozesses zur Abänderung des Steuermusters durch Lernen aus den Eingabedaten zum Zeitpunkt des Benutzereingriffs und den veränderten Ausgabedaten entsprechend einem gültigen Benutzereingriff.

13. Verfahren nach Anspruch 12, wobei Schritt c) den Schritt der Aktivierung eines Validierungszeitgebers umfasst, wenn ein Benutzereingriff erfasst wird, und der Erkennung eines gültigen Benutzereingriffs, wenn bei Ablauf des Validierungszeitgebers sich die Benutzereingriffsdaten nicht verändert haben und eine stabile Antwort des zugeordneten benutzerregelbaren Systems empfangen wird.

14. Verfahren nach vorstehendem Anspruch, wobei der Validierungszeitgeber eine variable Dauer hat, die von der Antwortzeit des benutzerregelbaren Systems abhängt.

15. Verfahren nach vorstehendem Anspruch, wobei der Validierungszeitgeber eine minimale Dauer tₘᵢₙ und eine maximale Dauer tₘₐₓ hat.

16. Verfahren nach irgendeinem der Ansprüche 12 bis 15, wobei Schritt c) den Schritt der Prüfung des Betriebszustands einer vorbestimmten Anzahl von Komponenten des benutzerregelbaren Systems zum Zeitpunkt des Benutzereingriffs umfasst.

17. Verfahren nach irgendeinem der Ansprüche 12 bis 16, wobei Schritt c) den Schritt der Prüfung einer vorbestimmten Anzahl von Parametern umfasst, die von dem benutzerregelbaren System unabhängig sind, dessen Steuerung aber beeinflussen können.

18. Verfahren nach irgendeinem der Ansprüche 12 bis 17, wobei der Lernprozess für jeden einzelnen gültigen Benutzereingriff initiiert wird.

19. Verfahren nach irgendeinem der Ansprüche 12 bis 18, wobei die Eingabedaten, Umgebungsdaten, Systemdaten und Benutzereingriffsdaten zum Zeitpunkt eines Benutzereingriffs gespeichert und entweder, nachdem ein entsprechender gültiger Eingriff erlernt oder nachdem dieser Benutzereingriff als ungültig gewertet worden ist, gelöscht werden.

20. Verfahren nach irgendeinem der Ansprüche 12 bis 19, das den Schritt der Identifizierung eines Benutzers und dann der Anwendung eines diesem Fahrgast entsprechenden Steuermusters in dem adaptiven Steuersystem zur Steuerung des zugeordneten benutzerregelbaren Systems umfasst.

## Revendications

1. Système de commande adaptative associé à un système réglable par l'utilisateur d'un véhicule, comprenant :
un réseau d'apprentissage (14) pouvant fonctionner dans un mode automatique dans lequel il reçoit des données d'entrée comprenant des données de capteur et génère des données de sortie selon une configuration de commande pour commander ledit système réglable par l'utilisateur ;
un moyen d'entrée d'utilisateur (18) pour générer des données d'intervention d'utilisateur pendant une intervention d'utilisateur ;
une unité de gestion des interventions (20) pour recevoir lesdites données d'intervention d'utilisateur ;
un moyen de modification de sortie (22) associé à ladite unité de gestion des interventions d'utilisateur pour générer des données de sortie modifiées afin de commander ledit système réglable par l'utilisateur selon lesdites données d'intervention d'utilisateur ;
une unité de gestion d'apprentissage (24) associée audit réseau d'apprentissage pour adapter ladite configuration de commande par apprentissage à partir des données d'entrée au moment de ladite intervention d'utilisateur et des données de sortie modifiées ; et
un moyen de filtrage (30) pour identifier une intervention d'utilisateur valide qui sera utilisée pour apprentissage par ladite unité de gestion d'apprentissage.

2. Système selon la revendication 1, dans lequel ledit moyen de filtrage comprend une temporisation de validation et conclut à une intervention d'utilisateur valide lorsque, à l'expiration de ladite temporisation de validation, une réponse stable dudit système associé réglable par l'utilisateur a été obtenue et que lesdites données d'intervention d'utilisateur sont inchangées.

3. Système selon la revendication précédente, dans lequel ladite temporisation de validation a une durée variable, qui est fonction du temps de réponse dudit système associé réglable par l'utilisateur.

4. Système selon la revendication précédente, dans lequel ladite temporisation de validation a à l'origine une durée de temporisation minimale et une durée de temporisation maximale.

5. Système selon l'une quelconque des revendications précédentes, dans lequel ledit moyen de filtrage est conçu pour contrôler l'état de fonctionnement, au moment de ladite intervention d'utilisateur, d'un nombre prédéterminé de composants dudit système réglable par l'utilisateur.

6. Système selon la revendication précédente, dans lequel
ledit système réglable par l'utilisateur est une unité de chauffage, de ventilation et de climatisation ; et
le contrôle de l'état desdits composants comprend le contrôle de la température ou de la capacité d'un réchauffeur ou refroidisseur d'air, le contrôle pour déterminer si une fonction de sécurité est active, ou si un point de consigne de température a été atteint.

7. Système selon l'une quelconque des revendications précédentes, dans lequel ledit moyen de filtrage est conçu pour contrôler un nombre prédéterminé de paramètres indépendants dudit système réglable par l'utilisateur, mais qui peuvent affecter sa commande.

8. Système selon la revendication précédente, dans lequel
ledit système réglable par l'utilisateur est une unité de chauffage, de ventilation et de climatisation ; et
le contrôle dudit nombre de paramètres prédéterminés comprend le contrôle de l'ouverture d'une fenêtre, d'une portière, d'un pavillon ou d'un toit ouvrant, le contrôle de la présence d'un tunnel, ou de vêtements humides.

9. Système selon l'une quelconque des revendications précédentes, dans lequel ledit réseau d'apprentissage comprend un réseau neuronal ou un système expert.

10. Système selon la revendication 1, comprenant un moyen d'identification d'utilisateur, et un moyen pour affecter une configuration de commande à un utilisateur identifié.

11. Système selon l'une quelconque des revendications précédentes, comprenant
un premier moyen de stockage de données pour stocker lesdites données d'entrée, ainsi que des données d'environnement et de système et lesdites données d'intervention d'utilisateur ; et
un deuxième moyen de stockage de données pour stocker lesdites données modifiées.

12. Méthode de commande d'un système de commande adaptative associé à un système réglable par l'utilisateur dans un véhicule, ledit système de commande adaptative étant utilisable dans un mode automatique, dans lequel il reçoit des données d'entrée comprenant des données de capteurs et génère des données de sortie selon une configuration de commande, ladite méthode comprenant les étapes suivantes :
(a) la détection de données d'intervention d'utilisateur résultant d'une intervention d'utilisateur avec ledit mode automatique ;
(b) la génération de données de sortie modifiées sur la base desdites données d'intervention d'utilisateur pour commander ledit système réglable par l'utilisateur ;
(c) l'identification d'une intervention d'utilisateur valide ; et
(d) dans le cas d'une intervention d'utilisateur valide, l'initialisation d'un processus d'apprentissage pour modifier ladite configuration de commande par apprentissage desdites données d'entrée au moment de ladite intervention d'utilisateur et des données de sortie modifiées correspondant à ladite intervention d'utilisateur valide.

13. Méthode selon la revendication 12, dans laquelle l'étape (c) comprend l'étape d'activation d'une temporisation de validation lorsqu'une intervention d'utilisateur est détectée et de conclusion à une intervention d'utilisateur valide si à l'expiration de ladite temporisation de validation, lesdites données d'intervention d'utilisateur n'ont pas été modifiées et qu'une réponse stable à été obtenue dudit système réglable par l'utilisateur associé.

14. Méthode selon la revendication précédente, dans laquelle ladite temporisation de validation a une durée variable qui est fonction du temps de réponse dudit système réglable par l'utilisateur.

15. Méthode selon la revendication précédente, dans laquelle ladite temporisation de validation a une durée minimale tₘᵢₙ et une durée maximale tₘₐₓ.

16. Méthode selon l'une quelconque des revendications 12 à 15, dans laquelle ladite étape (c) comprend l'étape de contrôler l'état de fonctionnement, au moment de ladite intervention d'utilisateur, d'un nombre prédéterminé de composants dudit système réglable par l'utilisateur.

17. Méthode selon l'une quelconque des revendications 12 à 16, dans laquelle ladite étape (c) comprend l'étape de contrôler un nombre prédéterminé de paramètres indépendants dudit système réglable par l'utilisateur, mais qui peuvent affecter sa commande.

18. Méthode selon l'une quelconque des revendications 12 à 17, dans laquelle ledit processus d'apprentissage est initialisé pour chaque intervention d'utilisateur valide.

19. Méthode selon l'une quelconque des revendications 12 à 18, dans laquelle lesdites données d'entrée, données d'environnement, données de système, et données d'intervention d'utilisateur sont stockées au moment d'une intervention d'utilisateur, et supprimées soit après qu'une intervention valide correspondante a été apprise, soit après que cette intervention d'utilisateur a été considérée invalide.

20. Méthode selon l'une quelconque des revendications 12 à 19, comprenant l'étape d'identification d'un utilisateur, et puis d'utilisation d'une configuration de commande correspondant audit passager dans ledit système de commande adaptative pour la commande dudit système associé réglable par l'utilisateur.
